# EUROPEAN PATENT APPLICATION

(11) **EP 2 446 854 A1**
(43) Date of publication of application: **02.05.2012**
(21) Application number: 10189092.9
(22) Date of filing: 27.10.2010
(51) Int. Cl.: A61C 8/00

(54) **Device for the guided bone and/or tissue regeneration**

(71) Applicant: Giuliano, Manuela, 89233 Neu-Ulm (DE); Mielecke, Peter, 89231 Neu-Ulm (DE)
(72) Inventor: Giuliano, Manuela, 89233 Neu-Ulm (DE); Mielecke, Peter, 89231 Neu-Ulm (DE)
(74) Representative: Teipel, Stephan

(57) **Abstract**

A device (1) for the guided bone and/or tissue regeneration comprising a rigid wall member (2) having an inner surface (3), an outer surface (4) and an edge (5), the wall member (2) having a 3-dimensional shape such that the edge (5) fits to the bone or tissue surface around the area where the regeneration is to take place and the inner surface (3) of the wall member (2) together with the area where the regeneration is to take place defines a hollow space (6) having the shape and size of the bone or tissue to be regenerated. A method of preparing such a device comprising the steps of:
a) acquiring information relating to the 3-dimensional shape and size of the bone and/or tissue to be regenerated;
b) processing said information; and
c) making said device.

## Description

The present invention relates to a device for the guided bone and/or tissue regeneration and a method of preparing the same.

In various surgical fields regeneration of bone lost due to atrophies, injuries and illnesses of various kinds is required. For example, tooth extraction leads to typical bone deficiency of ridge width and height of alveolar crests and represents large surgical and prosthetic challenge. Aesthetic appearance and conditions for implant placement or conventionally prosthetic constructions become worse. Traumatic tooth loss leads to alveolar resorption especially in sagittal direction. This can be due to avulsion of bone substance during the accident itself or due to resorption of the alveolar crest that takes place afterwards. Due to these problems different methods were developed to correct or preserve the bone deficiency of alveolar ridge.

The grafts used thus far to regenerate bone have been of natural origin or synthetic. The grafts have often been covered by membranes for the purpose of producing tissue compartmentation and preventing the growth of soft tissue inside the bone structure. These membranes, in turn, are of natural or synthetic origin and are re-absorbable or non-re-absorbable.

In the specifically dental sector, the need has arisen to regenerate bone and periodontal tissue around dental roots suffering from parodontitis.

In the case of non-retentive bone defects, cortico-medulla blocks have been used, but both the membranes and drills and the blocks require an investigative adaptation procedure. The materials used are not personalized to the needs of the receiver site but must be modeled from time to time intra-operationally with a considerable lengthening of operating times.

To remedy such drawbacks, a method is known for making grafts by means of rapid prototyping. The graft made using such method is shaped to precisely reproduce the outlines of the injured area for perfect adaptation to the receiver site, and features a structure able to withstand mechanical stresses.

The known methods for making grafts and the products thus obtainable are, however, susceptible to upgrading, in particular aimed at optimizing the application for bone or tissue regeneration for operations within the medical surgical and/or dental filed.

For example, EP 1 862 143 A1 discloses a device for the guided regeneration of bone and/or periodontal tissues comprising a substantially porous structure which is characterized in that it comprises a coating membrane for preventing the migration of soft tissues during the regeneration.

US 2005/0021142 A1 discloses a bone graft suitable to augment a sinus, wherein the bone graft comprises the synthetic material or demineralized bone matrix in a rigid form. The bone graft may comprise channels which may be conducive to osseintegration. The bone graft is prepared from a matrix material which may be porous wherein the porosity and the pore size or pore size distribution may be chosen so as to encourage natural bone to grow into the bone graft. Preferably, the pore dimension is between 10 and 25 µm.

US 5,700,479 discloses an article adapted for selectively-guided tissue regeneration in the treatment of a periodontal defect adjacent to the root of a tooth. The article comprises several sheet portions, the first portion being adapted to be disposed adjacent said root at the site of said defect. It is said that the article can also be used in connection with bone surgery to control bone fill of bone cavities resulting from cysts and malformations and of diastases following bone fractures.

These known devices for the guided regeneration of bone and/or periodontal tissues have the disadvantage that they constitute a rigid block generally of a porous material. With these materials it is difficult to precisely reproduce the outlines of the injured area for perfect adaptation to the receiver site. However, if the device does not precisely fit into the injured area, the desired regeneration of the bone structure can be difficult, if not impossible.

Moreover, the porous block-like structures of the prior art devices require a coating with a certain membrane for preventing the undesired migration of soft tissues into the devices as described in EP 1 862 143 A1.

In order to overcome the above problems, vertical ridge augmentation using a membrane technique associated with osseointegrated implants has been suggested (M. Simion, et al., Int. J. Periodontics Restorative Dent. 1994, 14, 496-511). In this technique, the implants and the miniscrews were covered with a membrane, and the flaps were sutured. Using a membrane has, however, the disadvantage that it may collapse into the defects. Moreover, with a membrane it is not possible to define a large hollow space where the regeneration of the bone or tissue is to take place. Only small defects can be successfully covered by a membrane. An additional disadvantage of membranes is that they do not allow immediately exerting forces on the membrane covered defect, such as forces due to chewing or movement of the tongue. As a further drawback, the membranes have to be adapted to the site of the defect during the surgical procedure resulting in a considerable lengthening of operating time.

In order to overcome at least some of these drawbacks it has been suggested to use titanium-reinforced membranes (M. Simion et al., Int. J. Periodontics Restoravtive Dent. 1994, 14, 496-511) or to use absorbable orthopedic pins, which serve as tent poles and prevent the barrier membranes from collapsing into the defects (W. Becker, et al., lnt. J. Periodontics Restorative Dent. 1994, 14, 48-61).

There is nevertheless still a need for a further improved device for the augmentation of bone and/or periodontal tissues which overcomes one or more of the above described problems. In particular, it should be possible to manufacture such device such that it very precisely reproduces the outlines of the injured area. Moreover, its manufacture should be fast, easy and cost-efficient. Furthermore, in order to allow the required perfect fitting over the cavity of the tissue, the device should not have any additional coating membrane. Therefore, it would be desirable to have a device which is able to prevent migration of soft tissue without the requirement of any additional membrane coating.

Additionally, it would be desirable to provide a device suitable for the guided bone and/or tissue regeneration which allows the regeneration of large bone or tissue defects, which immediately provides a stable surface being able to resist for example the pressure exerted in the mouth during chewing or movement of the tongue. Furthermore, it would be desirable to provide such device which exactly defines the space where the regeneration of the bone or tissue is to take place.

It has now been found that the above and further problems can be overcome by a device having a rigid wall in such a 3-dimensional shape that the edge of the wall fits to the bone or tissue surface around the defect and the wall defines a hollow space having the shape and size of the bone or tissue to be regenerated.

Therefore, the present invention relates to a device for the guided bone and/or tissue regeneration, said device comprising a rigid wall member having an inner and an outer surface and an edge, the wall member having a 3-dimensional shape such that the edge fits to the bone or tissue surface around the area where the regeneration is to take place and the inner surface of the wall member together with the area where the regeneration is to take place defines a hollow space having the shape and size of the bone or tissue to be regenerated.

The device of the present invention has the advantage that it can be manufactured prior to the surgical operation. Since it is manufactured in shape and size to exactly fit over the defect, the time required for the surgical procedure can be considerably saved. Furthermore, the device immediately provides a surface which withstands for example pressure and forces exerted in the mouth cavity. Thus, the function of the mouth is immediately restored. Moreover, the hollow space defined by the device of the present invention over the defect in the human or animal body exactly defines the space where the regeneration of the bone or tissue is to take place. Therefore, after final regeneration the new bone or tissue has exactly the predetermined and required shape and size.

A further advantage of the device of the present invention is that the edge of the wall member closely fits to the bone or tissue surface around the area where the regeneration is to take place. This close fitting prevents for example soft tissues from growing into the defect. This makes any membrane otherwise required for preventing soft tissues from growing into the defects superfluous.

The material of the wall is not particularly restricted as long as the material is compatible with the tissue of the human or animal body. Moreover, the material should exhibit sufficient stiffness and elasticity in order to be able to maintain the hollow space and to provide the best possible stability of the tissue, as well as, the device.

For example, the wall can consist of or include a biodegradable or a non-biodegradable material. Moreover, the material can be natural or synthetic. Suitable materials are known to a person skilled in the art and disclosed for example in the above-referenced prior art documents.

In a preferred embodiment the device of the present invention has a wall consisting of or including a synthetic polymer, in particular polytetrafluoroethylene (PTFE), polyetheretherketone (PEEK) or polylcatide (PLA).

The device of the present invention can comprise one or more sites prepared for the installation of implants, such as dental implants. These sites can, for example, be projections at exact positions on the inner and/or outer surface of the wall member. Preferably the projections and the wall member are formed integrally, for example they are formed integrally of the same material. The projections should be formed exactly at the positions where implants are intended to be fit into the regenerated bone or to the device.

The projections have the advantage that for example implants can be fitted into the device either immediately or some time after the device has been placed over the defect. A further advantage is that regenerated bone can be extremely hard which makes it difficult to fit implants into this bone after regeneration. Projections on the inner surface of the wall member prevent the bone from regenerating into these areas thereby making it easier for example to drill holes into the areas where the implants are to be fitted in.

The device of the present invention may comprise fastening means for fastening the device to a bone or tissue segment around the area where the regeneration is to take place. Suitable fastening means are for example screws or pins.

In a further embodiment the device of the present invention can at least partially be coated with a pharmaceutically active compound, such as a compound inhibiting bone resorption, a compound inhibiting growth of tumor cells or a compound killing tumor cells. The device can also bear a radioactive material, such as a radioactive capsule, for the guided irradiation of for example a tumor site.

The wall member of the device of the present invention is either non-porous or porous, preferably non-porous.

The hollow space defined by the wall member of the device of the present invention can be filled with any material facilitating the regeneration of the bone or tissue. Such material is known to a person skilled in the art and commercially available for example as Bio-Oss^{®}. To these or other materials compounds preventing for example bone degeneration or growth factors, such as BMP (bone morphogenic protein) can be added.

The device of the present invention is particularly suitable for use in a method of guided bone and/or tissue regeneration in a human or an animal. For example, the device can be used for the regeneration of jaw-bone as basis for implants, for the augmentation of bone defects after surgery (e.g. resection of tumors), or for the augmentation in connection with the reconstruction of a knee or hip.

In a further embodiment the present invention relates to a method of preparing the above described device which method comprises the steps of:
a) acquiring information relating to the 3-dimensional shape and size of the bone and/or tissue to be regenerated and the bone and/or tissue surface around the area where the regeneration is to take place;
b) processing said information for determining the 3-dimensional shape and size of the device; and
c) making said device using said processed information.

In the first step the method comprises acquisition of the information relating to the position, to the confirmation and to the dimensions of the area of bone or tissue to be regenerated as well as to the surface around this area. Usefully, the acquisition phase involves the taking of one or more images of the area, for example, by means of CT, DVT or other procedures.

In the second step the information is processed for example by means of a suitable software program implemented on a computer for determining the 3-dimensional shape and size of the device.

In the last step of the method of the present invention the device is made using the obtained processed information. Preferably the structure of the device is performed starting with the processed software model and using an additive and/or substractive process. The process can be a substantially automated rapid prototyping process, such as CAM.

The device of the present invention will now be explained with reference to an example shown in the attached figures whereby this example is not to be construed as being limiting. In the attached figures
**Figure 1** shows a schematic view of an area of bone to be regenerated including one example of a device of the present invention;
**Figure 2** shows a schematic and partial section view of one embodiment of the device according to the invention; and
**Figure 3** shows a schematic view of the device of figure 2 being turned by around 90°.

With special reference to the figures, a device for the guided bone and/or tissue regeneration in the medical, surgical and dental field, has been globally designated by reference No. 1.

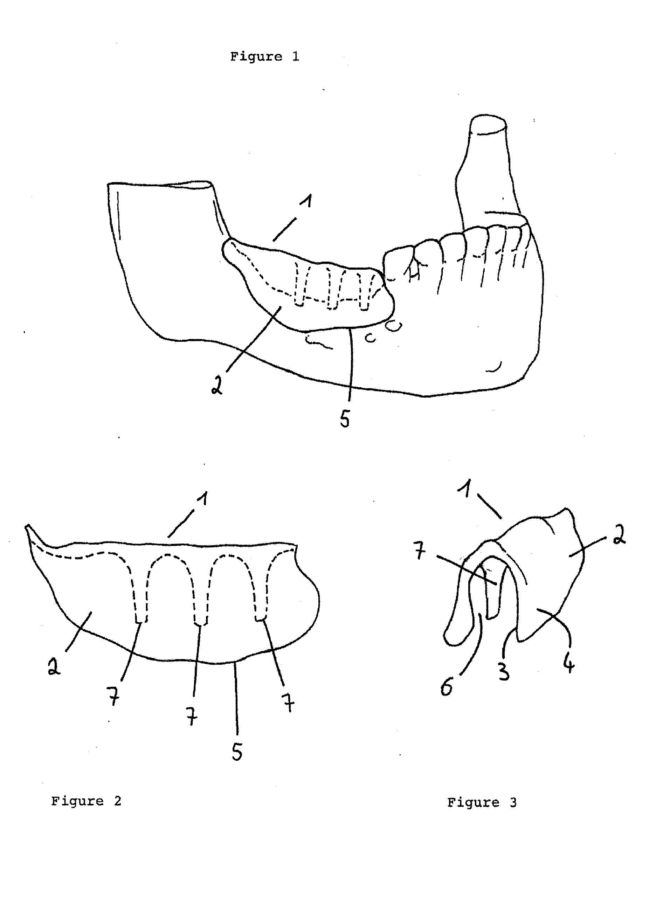

Figure 1 shows an area of bone to be regenerated including one embodiment of the device (1) of the present invention. The device comprises the wall member (2) having a 3-dimensional shape such that the edge (5) fits to the bone or tissue surface around the area where the regeneration is to take place.

In dotted lines three projections inside the hollow space defined by the wall member of the device are shown. These projections are in those areas where no bone should be regenerated in order to facilitate the fitting of implants.

Figure 2 shows a device (1) of the present invention in side view including in dotted lines three projections (7).

In Figure 3 the device of figure 2 is shown in a view turned by 90°. The inner surface (3) of the wall member (2) defines the hollow space (6). One projection (7) is depicted within the hollow space (6).

## Claims

1. Device (1) for the guided bone and/or tissue regeneration, said device comprising a rigid wall member (2) having an inner surface (3), an outer surface (4) and an edge (5), the wall member (2) having a 3-dimensional shape such that the edge (5) fits to the bone or tissue surface around the area where the regeneration is to take place and the inner surface (3) of the wall member (2) together with the area where the regeneration is to take place defines a hollow space (6) having the shape and size of the bone or tissue to be regenerated.

2. Device according to claim 1, wherein the wall member (2) consists of or includes a biodegradable or non-biodegradable natural or synthetic material.

3. Device according to claim 2, wherein the wall member (2) consists of or includes polytetrafluoroethylene (PTFE), polyetheretherketone (PEEK) or polylactide (PLA).

4. Device according to any of the preceding claims, comprising at least one site prepared for the installation of a dental implant.

5. Device according to claim 4, wherein the at least one site is a projection (7) on the inner surface (3) and/or outer surface (4) of the wall member (2).

6. Device according to claim 5, wherein the projection(s) (7) and the wall member (2) are formed integrally.

7. Device according to any of the preceding claims, comprising fastening means for fastening to a bone or tissue segment around the area where the regeneration is to take place.

8. Device according to any of the preceding claims, which is at least partially coated with a pharmaceutically active compound, such as a compound inhibiting bone resorption, a compound inhibiting the growth of tumor cells or a compound killing tumor cells.

9. Device according to any of the preceding claims for use in a method of guided bone and/or tissue regeneration in a human or animal.

10. Method of preparing a device according to any of claims 1-8 comprising the steps of:
a) acquiring information relating to the 3-dimensional shape and size of the bone and/or tissue to be regenerated and the bone and/or tissue surface around the area where the regeneration is to take place;
b) processing said information for determining the 3-dimensional shape and size of the device; and
c) making said device using said processed information.

11. Method according to claim 10, wherein in step c) the device is made using an additive and/or substractive process.
